# EUROPEAN PATENT APPLICATION

(11) **EP 1 511 188 A1**
(43) Date of publication of application: **02.03.2005**
(21) Application number: 04300529.7
(22) Date of filing: 11.08.2004
(51) Int. Cl.: H04B 7/06

(54) **Antenna diversity transmitter/receiver**

(30) Priority: 29.08.2003 FR 0310329
(71) Applicant: Thomson Licensing S.A., 92100 Boulogne Billancourt (FR)
(72) Inventor: Fontaine, Patrick, 35700 Rennes (FR); Jeanne, Ludovic, 35200 Rennes (FR); Guillouard, Samuel, 35135 Chantepie (FR)
(74) Representative: Ruellan-Lemonnier, Brigitte

(57) **Abstract**

The invention is a transmission/reception device comprising at least two reception antennas 1, 2, 16 and 17 and means making it possible to evaluate the quality of reception 5 and 7 on each of the antennas, at least two transmission antennas 3 and 4 distinct from the reception antennas 1, 2, 16 and 17, each transmission antenna being associated with at least one reception antenna, and transmission antenna selection means 9 which select the transmission antenna to be used. The transmission antenna selected is that which is associated with the reception antenna which corresponds to the best reception.

## Description

The invention pertains to an antenna diversity transmitter/receiver. More particularly, the invention pertains to transmission antenna selection for a transmitter/receiver having several transmission antennas and several reception antennas.

Communication systems operating inside buildings are known among wireless communication systems. The Hiperlan2 and IEEE802.11a standards define communication systems operating in frequency bands situated in the vicinity of 5 GHz. To increase the resistance to noise and to echoes of these transmission systems, it is known to effect antenna diversity. Antenna diversity consists in multiplying up the antennas and therefore the wave transmission paths so that the antennas are not subject to the same echo constraints.

It is well known to effect antenna diversity in reception by comparing the signals received from the various antennas. In transmission, the problem is different. On transmission, it is not possible to compare the signal received by a remote receiver.

The invention proposes to effect antenna diversity on transmission based on the reception characteristics of antennas associated with the transmission antennas.

The invention is a transmission/reception device comprising at least two reception antennas and means making it possible to evaluate the quality of reception on each of the antennas, at least two transmission antennas distinct from the reception antennas, each transmission antenna being associated with at least one reception antenna, and transmission antenna selection means which select the transmission antenna to be used. The transmission antenna selected is that which is associated with the reception antenna, which corresponds to the best reception.

Preferably, each transmission antenna is associated with a group of at least two reception antennas. Each transmission antenna is associated with one or more reception antennas, which cover similar radiation zones. The transmission antennas may be disposed on opposite sides of an apparatus including said device. At least one transmission antenna and its associated reception antennas are separated from the other antennas by a wall.

The invention will be better understood and other features and advantages will become apparent on reading the description, which follows, the description making reference to the appended drawings in which:
Figure 1 represents a first embodiment of an antenna diversity transmitter/receiver according to the invention,
Figure 2 represents an exemplary positioning of the antennas of the device of Figure 1,
Figure 3 represents a second embodiment of an antenna diversity transmitter/receiver according to the invention,
Figures 4 and 5 represent apparatuses including the device of Figure 3.

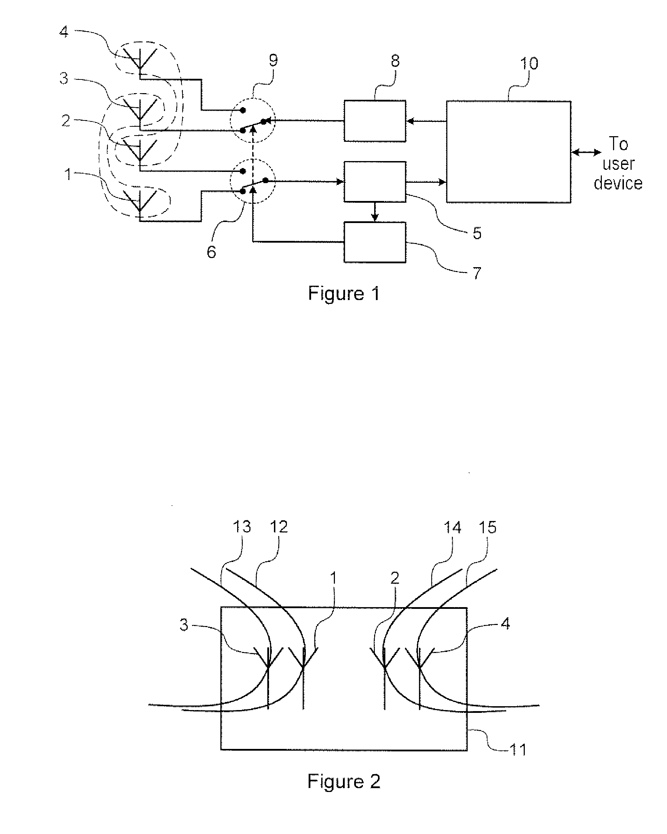

Figure 1 represents a first embodiment, which comprises a first reception antenna 1, a second reception antenna 2, a first transmission antenna 3 and a second transmission antenna 4.

The first and second reception antennas 1 and 2 are linked to a demodulation and decoding circuit 5 by way of a reception switch 6. An evaluation and selection circuit 7 is linked to the demodulation and decoding circuit 5 so as to evaluate the quality of reception of a selected reception antenna and to position the reception switch 6 on the reception antenna 1 or 2 which corresponds to the best reception path. For further details on the embodiment of the circuit for evaluating and selecting the reception path, the person skilled in the art can, for example, refer to International Patent Application WO-A-03/049323.

A coding and modulation circuit 8 is linked to the first and second transmission antennas 3 and 4 by way of a transmission switch 9. A data processing circuit 10 receives data from the demodulation and decoding circuit 5 and supplies data to the coding and modulation circuit 8. The data processing circuit 10 serves to shape the data according to a communication protocol, for example IEEE802.11a and to supply and/or receive data to a user device (not represented). The user device may be a personal computer, a television set, a DVD disk reader, a satellite decoder or any other apparatus linked to a communication network by way of a wireless link.

The transmission switch 9 is a simple switch, which uses the same command as the reception switch 6. In this exemplary embodiment, the first transmission antenna 3 is associated with the first reception antenna 1; and the second transmission antenna 4 is associated with the second reception antenna 2. For the association of the reception and transmission antennas to be of benefit, it is appropriate to place the associated antennas in proximity with one another so that the radioelectric behaviour of the transmission antenna is closer to the associated reception antenna than to the reception antenna that is not associated with it.

Figure 2 illustrates an exemplary implementation of the antennas of the device of Figure 1 in an apparatus including a user device 11. In this example, the transmission antennas 3 and 4 and reception antennas 1 and 2 are antennas having a directional radiation pattern. The transmission and reception antennas 1 and 3 (respectively 2 and 4), which are associated with one another are positioned so that their radiation pattern intersects. The line 12 shows the limit of the radiation zone of the first reception antenna 1. The first transmission antenna 3 is situated in the radiation zone of the first reception antenna 1 and is delimited by the line 13. The radiation zone of the first transmission antenna 3 lies in the radiation zone of the first reception antenna 1 so that, if the first reception antenna 1 corresponds to the best reception antenna for a given remote transmitter/receiver, then the first transmission antenna is also the best antenna for transmission. This is all the more true as the radiation zones of the second antennas, reception 2 and transmission 4, delimited by the curves 14 and 15 do not overlap the radiation zones of the first antennas 1 and 3. The isolation between a transmission antenna 3 (resp. 4) and the associated reception antenna 1 (resp. 2) is ensured by the directivity of the transmission antenna 3 (resp. 4) which does not radiate in the direction of the reception antenna 1 (resp. 2).

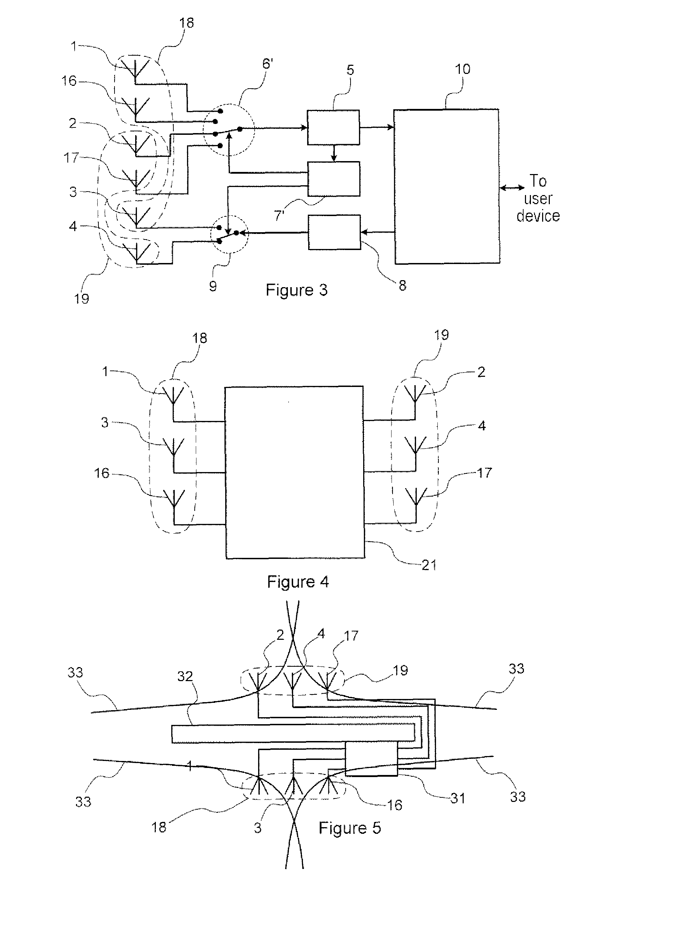

Figure 3 represents a second embodiment of a transmitter receiver device according to the invention. For this embodiment, the same references are used for the same elements described previously with Figure 1.

This second embodiment differs chiefly through the addition of a third reception antenna 16 associated with the first transmission antenna 3 and the addition of a fourth reception antenna 17 associated with the second transmission antenna 4. The first to fourth reception antennas 1, 2, 16 and 17 are linked to the demodulation and decoding circuit 5 by way of a reception switch 6' choosing one input from four. The evaluation and selection circuit 7' evaluates the four possible reception paths and chooses the best. The evaluation and selection circuit 7' has a command output linked to the transmission switch 9 so as to select the transmission antenna 3 or 4 which is associated with the reception antenna 1, 2, 16 or 17 which is associated therewith.

The use of a greater number of reception antennas than the number of transmission antennas is especially advantageous when the antennas cannot be sited under the same conditions. A benefit of antenna diversity in reception is the spacing apart of omnidirectional reception antennas by a distance of the order of the wavelength of the signals transmitted or makes it possible to use directional reception antennas covering various sectors. Such diversity may not suffice when the physical position of the antennas does not make it possible to cover all directions. One then resorts to multiplying up the antennas. For transmission, an omnidirectional antenna may suffice if the receiver for which the message is intended also uses antenna diversity in reception. However, depending on the position of the transmission antenna, a physical obstacle may cause the transmission not to be truly omnidirectional.

Figure 4 illustrates a user device 21, which is, for example, a satellite decoder and which includes the transmitter/receiver device of Figure 3. A first group of antennas 18, comprising the first and the third reception antennas 1 and 16 and the first transmission antenna 3, is sited on one side of the housing of the user device. A second group of antennas 19, comprising the second and the fourth reception antennas 2 and 17 and the second transmission antenna 4, is sited on one side of the housing of the user device. The housing being shielded, the omnidirectional nature of the antennas will be disturbed. The use of diversity of order 4 in reception and of order 2 in transmission allows a considerable improvement in the performance of the transmitter/receiver, each transmission antenna being sited under the same disturbance conditions as its associated reception antennas.

Figure 5 represents another exemplary use of the device of Figure 3 where the first group of antennas 18 is sited in proximity to a user device 31 and where the second group of antennas 19 is sited remotely, for example on the other side of a wall 32. The reception antennas may have some directivity, as shown by the radiation curves 33, so as to improve their gain. Such a device is especially beneficial when a network extends over a large area which comprises numerous walls.

The invention is not limited to the examples described. Indeed, the number of transmission and reception antennas may be much bigger than what is described in the above examples. Also, the transmission antennas are all omnidirectional, but they may very well have a radiation zone having some directivity which corresponds to the union of the radiation zones of the reception antennas which are associated therewith.

## Claims

1. Transmission/reception device comprising at least two reception antennas (1, 2, 16, 17) and means making it possible to evaluate the quality of reception (7, 7') on each of the antennas, **characterized in that** it comprises:
- at least two transmission antennas (3, 4) distinct from the reception antennas, each transmission antenna being associated with at least one reception antenna,
- transmission antenna selection means (9) which select the transmission antenna to be used,
and **in that** the transmission antenna selected is that which is associated with the reception antenna which corresponds to the best reception.

2. Device according to Claim 1, **characterized in that** each transmission antenna (3, 4) is associated with a group of at least two reception antennas (1, 16, 2, 17).

3. Device according to one of Claims 1 or 2, **characterized in that** each transmission antenna (3, 4) is associated with one or more reception antennas (1, 16, 2, 17), which cover similar radiation zones.

4. Device according to Claim 3, **characterized in that** the transmission antennas (3, 4) are disposed on opposite sides of an apparatus (21) including said device.

5. Device according to Claim 3, **characterized in that** at least one transmission antenna (3) and its associated reception antennas (1, 16) are separated from the other antennas (2, 4, 17) by a wall (32).
